# EUROPÄISCHE PATENTSCHRIFT

(11) **EP 3 892 962 B1**
(45) Veröffentlichungstag und Bekanntmachung des Hinweises auf die Patenterteilung: **08.03.2023**
(21) Anmeldenummer: 20168807.4
(22) Anmeldetag: 08.04.2020
(51) Int. Cl.: G01D 5/244, G01D 5/347

(54) **ANORDNUNG FÜR EINE POSITIONSMESSUNG**
ASSEMBLY FOR POSITION MEASUREMENT
AGENCEMENT POUR UNE MESURE DE POSITION

(43) Veröffentlichungstag der Anmeldung: 13.10.2021
(73) Patentinhaber: Dr. Johannes Heidenhain GmbH, 83301 Traunreut (DE)
(72) Erfinder: BAUER, Kilian, 83362 Surberg (DE)

(56) Entgegenhaltungen:
- EP-A1- 2 431 705
- DE-A1- 19 802 036
- DE-A1-102007 002 772

## Beschreibung

### GEBIET DER TECHNIK

Die vorliegende Erfindung betrifft eine Anordnung nach dem Oberbegriff des Anspruchs 1.

### STAND DER TECHNIK

WO 2006/133753 A1 offenbart eine Anordnung für eine Positionsmessung mit einem Trägerkörper und mehreren entlang eines Maßstabs und an beiden Seiten des Maßstabs angeordneten Befestigungselementen. Zwischen dem Trägerkörper und den Befestigungselementen ist jeweils ein Festkörpergelenk angeordnet, welches das Befestigungselement und somit den Maßstab in Messrichtung X auslenkbar am Trägerkörper ankoppelt.

Ein Nachteil der bekannten Messanordnung ist, dass der Trägerkörper einteilig aufgebaut ist. Dies hat zur Folge, dass zum einen die Herstellung des Trägerkörpers bzw. der Messanordnung relativ kostenintensiv ist. Zum anderen ist die Realisierung einer thermischen Entkopplung zwischen dem Trägerkörper (bzw. der Messanordnung) und einem Grundkörper (z. B. Maschinenbett) relativ kompliziert. Denn typischerweise sind hierzu konstruktive Maßnahmen, beispielsweise der Einsatz von zusätzlichen Festkörpergelenken, erforderlich. Die thermische Entkopplung ist wiederum Voraussetzung für eine hohe Präzision der Positionsmessung.

DE 198 02 036 A1 offenbart eine Vorrichtung und ein Verfahren zur mechanischen Justage von Teilungsträgern, die einen Maßstab für ein vorzugsweise inkrementales Messsystem bilden.

In DE 10 2007 002772 A1 ist offenbart, dass ein eine Messteilung aufweisender Maßstab durch elektrostatische Klemmung an einem Träger sicher und lösbar gehalten wird.

Eine Anordnung nach dem Oberbegriff des Anspruchs 1 ist in EP 2 431 705 A1 offenbart.

### ZUSAMMENFASSUNG DER ERFINDUNG

Der vorliegenden Erfindung liegt die Aufgabe zugrunde, eine Anordnung für eine Positionsmessung anzugeben, die einen einfachen und kostengünstigen Aufbau hat und mit der eine präzise Positionsmessung ermöglicht wird.

Diese Aufgabe wird erfindungsgemäß durch eine Anordnung mit den Merkmalen des Anspruchs 1 gelöst.

Die erfindungsgemäß ausgebildete Anordnung umfasst einen Träger, einen auf dem Träger angeordneten Maßstab und eine Mehrzahl von Befestigungselementen zum Befestigen des Maßstabs an dem Träger. Der Maßstab erstreckt sich in einer Längsrichtung. Der Maßstab weist eine Messteilung zur Positionsmessung zumindest in Längsrichtung auf. Der Träger weist eine Mehrzahl von einzelnen Abschnitten auf. Die Befestigungselemente sind auf den einzelnen Abschnitten des Trägers angeordnet.

Vorzugsweise sind die einzelnen Abschnitte des Trägers jeweils einem Befestigungselement oder einem Paar von in einer Querrichtung, die senkrecht zur Längsrichtung verläuft, einander gegenüberliegend angeordneten Befestigungselementen der Mehrzahl von Befestigungselementen zugeordnet.

Es ist vorteilhaft, wenn die einzelnen Abschnitte des Trägers in Längsrichtung getrennt voneinander angeordnet sind.

Ferner ist es vorteilhaft, wenn die einzelnen Abschnitte des Trägers in Längsrichtung verteilt, beispielsweise äquidistant, angeordnet sind.

Alternativ können die einzelnen Abschnitte des Trägers nicht-äquidistant angeordnet sein. Beispielsweise ist der Abstand zwischen den einzelnen Abschnitten des Trägers in der Nähe eines Fixpunkts (d.h. Stelle einer ortsfesten Fixierung des Maßstabs) größer als der Abstand zwischen den einzelnen Abschnitten des Trägers an den beiden freien Enden des Maßstabs.

Die Befestigungselemente weisen vorzugsweise mehrere Festkörpergelenke zur (lokalen) thermischen Entkopplung zwischen dem Träger und dem Maßstab auf.

Zur ortsfesten Fixierung des Maßstabs gegenüber dem Träger kann ein Befestigungselement in Form einer Kleberaupe vorgesehen sein.

Die einzelnen Abschnitte des Trägers können auch als diskrete Platten bezeichnet werden.

Die Messteilung dient bevorzugt zur Positionsmessung in Längsrichtung (d.h. Freiheitsgrad X) sowie in Querrichtung (d.h. Freiheitsgrad Y). Alternativ kann die Messteilung (in Verbindung mit entsprechenden Abtasteinheiten) derart ausgebildet sein, dass eine Positionsmessung in 6 Freiheitsgraden (d.h. Freiheitsgrade X, Y, Z, RX, RY, RZ) ermöglicht wird.

Die Messteilung ist beispielsweise eine Inkrementalteilung. Alternativ kann die Messteilung eine absolute Teilung sein, beispielsweise ausgebildet als Pseudo Random Code.

Durch die Erfindung wird eine hohe Reproduzierbarkeit der Geradheit des Maßstabs erreicht. Dies ist insbesondere vorteilhaft, wenn der Maßstab die Messteilung zur Positionsmessung in Längsrichtung sowie in Querrichtung aufweist. Hierzu umfasst die Messteilung mehrere entlang einer ersten Messrichtung (Hauptmessrichtung bzw. X-Richtung) periodisch angeordnete Teilungsstrukturen und mehrere entlang einer zweiten Messrichtung (Y-Richtung) periodisch angeordnete Teilungsstrukturen. Die erste Messrichtung und die zweite Messrichtung verlaufen senkrecht zueinander. Die Teilungsstrukturen umfassen insbesondere jeweils Teilungsstriche.

Vorteilhafte Ausbildungen der Erfindung entnimmt man den abhängigen Ansprüchen.

### KURZE BESCHREIBUNG DER ZEICHNUNGEN

Einzelheiten und Vorteile der erfindungsgemäßen Anordnung ergeben sich aus der nachfolgenden Beschreibung eines Ausführungsbeispiels anhand der beiliegenden Figuren.

Es zeigen
- Figur 1: eine perspektivische Ansicht einer erfindungsgemäß ausgebildeten Anordnung mit einem Träger, einem auf dem Träger angeordneten Maßstab und einer Mehrzahl von Befestigungselementen;
- Figur 2: eine Draufsicht auf die Anordnung nach Figur 1;
- Figur 3a: eine perspektivische Ansicht eines einzelnen Abschnitts des Trägers mit einem ersten Befestigungselement und einem zweiten Befestigungselement;
- Figur 3b: eine Draufsicht auf den einzelnen Abschnitt des Trägers nach Figur 3a;
- Figur 4a: eine perspektivische Ansicht eines weiteren einzelnen Abschnitts des Trägers mit einem dritten Befestigungselement und einem vierten Befestigungselement; und
- Figur 4b: eine Draufsicht auf den weiteren einzelnen Abschnitt des Trägers nach Figur 4a.

### BESCHREIBUNG DER AUSFÜHRUNGSFORMEN

Gleiche Elemente oder funktionell gleiche Elemente sind in den Figuren mit gleichen Bezugszeichen versehen.

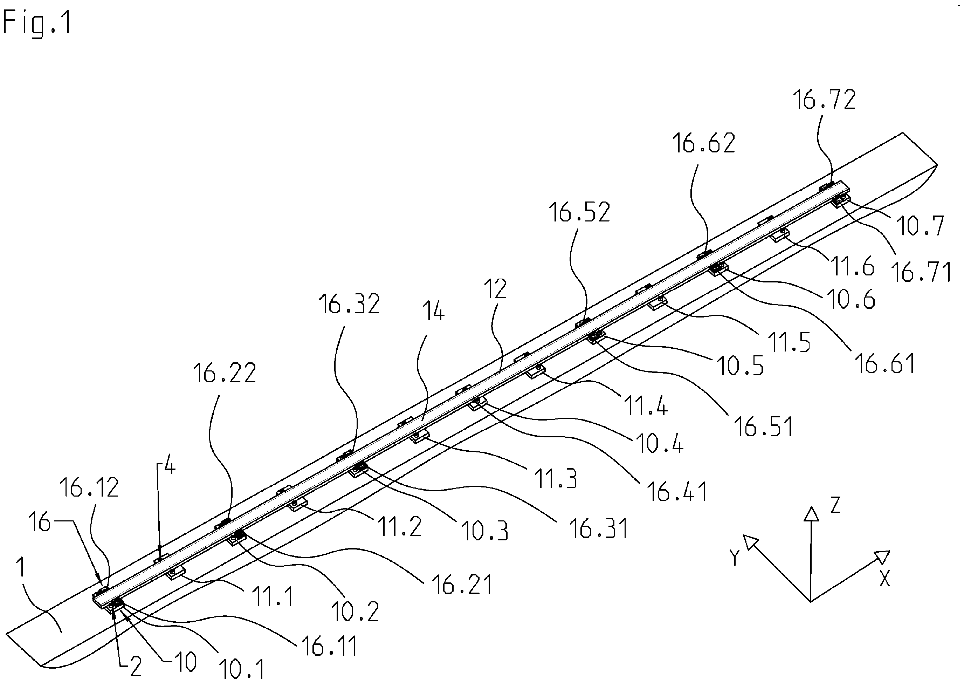

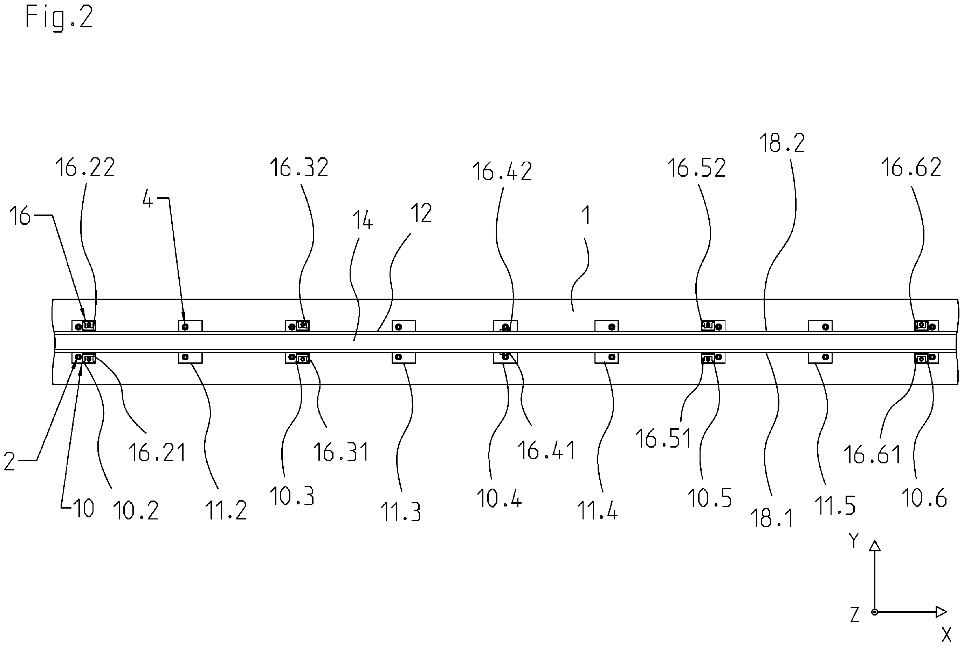

Eine Ausführungsform der Erfindung wird nachfolgend anhand der Figuren 1 und 2 erläutert. Die erfindungsgemäß ausgebildete Anordnung umfasst einen Träger 10, einen auf dem Träger 10 angeordneten Maßstab 12 und eine Mehrzahl von Befestigungselementen 16. Der Maßstab 12 erstreckt sich in einer Längsrichtung (Hauptmessrichtung) X und weist eine in einer Messteilungsebene (d. h. X/Y-Ebene) angeordnete Messteilung 14 auf. Die Messteilung 14 ist als lichtelektrisch abtastbare Inkrementalteilung zur hochgenauen Positionsmessung in Längsrichtung X sowie zusätzlich in einer zweiten senkrecht dazu verlaufenden Querrichtung Y ausgebildet. Der Maßstab 12 besteht vorzugsweise aus einem Material mit vernachlässigbar kleinem thermischen Ausdehnungskoeffizienten, insbesondere mit einem thermischen Ausdehnungskoeffizienten α im Temperaturbereich von 0° - 50°C kleiner als 1,5 x 10⁻⁶ K⁻¹, insbesondere aber kleiner als 0,1 × 10⁻⁶ K⁻¹. Derartige Materialien sind Glas bzw. Glaskeramik (z. B. Zerodur) oder Metalle wie z. B. Invar.

Der Träger 10 besteht vorzugsweise aus Stahl mit einem thermischen Ausdehnungskoeffizienten von etwa 10,5 × 10⁻⁶ K⁻¹.

Der Träger 10 weist eine Mehrzahl von einzelnen plattenförmigen Abschnitten 10.1 - 10.7 auf. Der Maßstab 12 weist einen rechteckförmigen Querschnitt mit zwei einander gegenüberliegenden seitlichen Oberflächen 18.1, 18.2, die jeweils in Längsrichtung X verlaufen, auf (vgl. Figur 2).

Die Befestigungselemente 16 dienen zum Befestigen des Maßstabs 12 an dem Träger 10. Die Befestigungselemente 16 umfassen eine erste Gruppe von Befestigungselementen 16.11 - 16.71 und eine zweite Gruppe von Befestigungselementen 16.12 - 16.72. Die Befestigungselemente 16.11 - 16.71 und 16.12 - 16.72 sind an den beiden einander gegenüberliegenden seitlichen Oberflächen 18.1, 18.2 des Maßstabs 12 angeordnet (vgl. Figur 2). Wie in Figur 1 gezeigt, sind die Befestigungselemente 16 auf den einzelnen Abschnitten 10.1 - 10.7 des Trägers 10 angeordnet.

Die in Figur 1 gezeigte Anordnung ist auf einem Grundkörper 1 (z. B. Maschinenbett) angeordnet. Zur Befestigung der Anordnung an dem Grundkörper 1 sind Schrauben 2 vorgesehen. Die Schrauben 2 erstrecken sich durch die einzelnen Abschnitte 10.1 - 10.7 hindurch bis in den Grundkörper 1 hinein. Der Grundkörper 1 besteht beispielsweise aus Granit.

Durch die Anordnung gemäß der Erfindung wird ein mehrteilig aufgebauter Trägerkörper (d. h. Träger 10) realisiert. Der mehrteilige Aufbau ist im Vergleich zum einteiligen Aufbau gemäß dem Stand der Technik dahingehend vorteilhaft, dass die Herstellung des Trägerkörpers und somit der Anordnung relativ kostengünstig ist. Des Weiteren hat der mehrteilige Aufbau den Vorteil, dass eine thermische Entkopplung zwischen dem Träger 10 und dem Grundkörper 1 auf einfache Weise erfolgen kann. Hierbei kann insbesondere auf zusätzliche konstruktive Maßnahmen, beispielsweise den Einsatz von weiteren Festkörpergelenken, verzichtet werden.

Es ist vorteilhaft, dass die einzelnen Abschnitte (diskrete Platten) 10.1 - 10.7 des Trägers 10 relativ klein sind und sich quasi an jeder Stelle (d.h. lokal an der jeweiligen X-Position) einfach mit dem Grundkörper 1 mitbewegen können. Dadurch wird im Gegensatz zum Stand der Technik die soeben genannte thermische Entkopplung ohne den Einsatz von zusätzlichen konstruktiven Maßnahmen erreicht.

Zwischen den einzelnen Abschnitten 10.1 - 10.7 des Trägers 10 sind weitere Abschnitte 11.1 - 11.6 des Trägers 10 (sogenannte Zwischenabschnitte) angeordnet. Die Zwischenabschnitte 11.1 - 11.6 sind durch Schrauben 4 an dem Grundkörper 1 befestigt und dienen zur Unterstützung des Maßstabs 12 in einer Höhenrichtung (d. h. Z-Richtung). Hierzu sind die Zwischenabschnitte 11.1 - 11.6 dazu ausgebildet, den Maßstab 12 jeweils über Haftmittel an Zwischenpositionen, d. h. Positionen zwischen den einzelnen Abschnitten 10.1 - 10.7 des Trägers 10, in Höhenrichtung Z starr an dem Träger 10 zu tragen und somit starr mit dem Grundkörper 1 zu verbinden. Die Zwischenabschnitte 11.1 - 11.6 können auch weggelassen werden.

In Bezug auf Figur 1 sind die einzelnen Abschnitte 10.1 - 10.7 des Trägers 10 jeweils einem Paar von in Querrichtung Y einander gegenüberliegend angeordneten Befestigungselementen 16.11, 16.12 - 16.71, 16.72 der Mehrzahl von Befestigungselementen 16 zugeordnet. Insbesondere sind die paarweise angeordneten Befestigungselemente 16.11, 16.12 - 16.71, 16.72 auf den diesen jeweils zugeordneten, einzelnen Abschnitten 10.1 - 10.7 des Trägers 10 angeordnet.

Alternativ können die einzelnen Abschnitte 10.1-10.7 des Trägers 10 jeweils nur einem Befestigungselement (z. B. die Befestigungselemente 16.11 - 16.71 oder die Befestigungselemente 16.12 - 16.72) der Mehrzahl von Befestigungselementen 16 zugeordnet sein.

Wie in Figur 1 gezeigt, sind die einzelnen Abschnitte 10.1 - 10.7 des Trägers 10 in Längsrichtung X getrennt voneinander angeordnet. Ferner sind die einzelnen Abschnitte 10.1 - 10.7 des Trägers 10 in Längsrichtung X verteilt, insbesondere äquidistant, angeordnet. Dabei beträgt der Abstand zwischen den einzelnen Abschnitten 10.1 - 10.7 des Trägers 10 beispielsweise jeweils 100 mm.

Die in Figur 1 gezeigten Befestigungselemente 16 weisen ein an der ersten seitlichen Oberfläche 18.1 des Maßstabs 12 angeordnetes erstes Befestigungselement 16.11 und ein an der zweiten seitlichen Oberfläche 18.2 des Maßstabs 12 angeordnetes zweites Befestigungselement 16.12 auf. Das erste Befestigungselement 16.11 und das zweite Befestigungselement 16.12 sind in Querrichtung Y einander gegenüberliegend angeordnet. Die folgenden Ausführungen gelten analog für die paarweise angeordneten Befestigungselemente 16.21, 16.22 - 16.71, 16.72 (außer 16.41, 16.42).

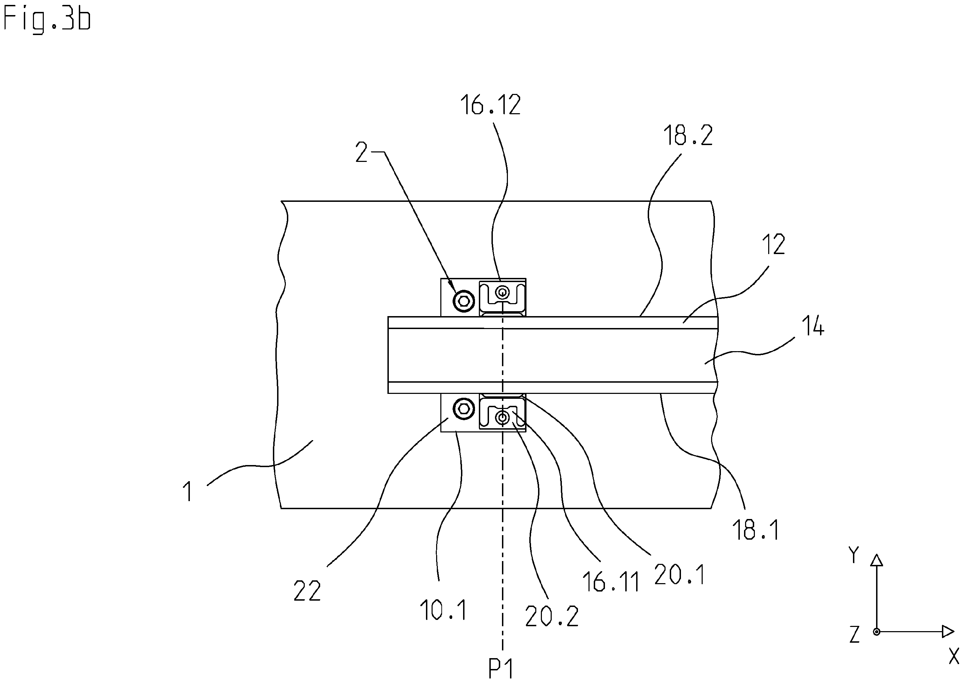

Das erste Befestigungselement 16.11 ist dazu ausgebildet, den Maßstab 12 an einer Position P1 (vgl. Figur 3b) in Längsrichtung X frei beweglich gegenüber dem Träger 10 zu tragen. Ferner ist das erste Befestigungselement 16.11 dazu ausgebildet, den Maßstab 12 in Querrichtung Y starr an dem Träger 10 zu tragen. Hierzu ist das erste Befestigungselement 16.11 insbesondere als Festkörpergelenk ausgebildet.

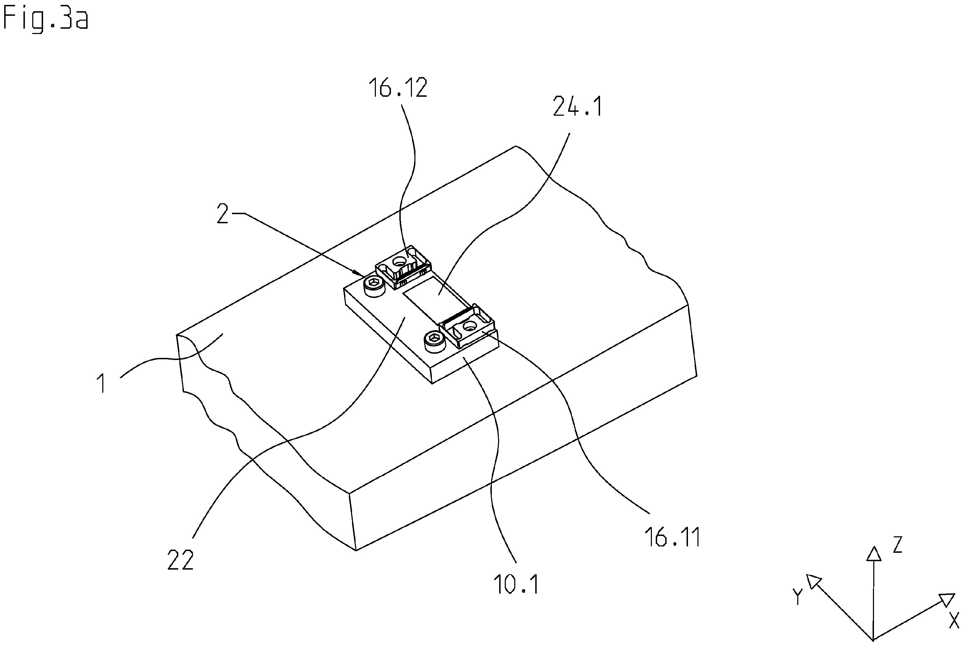

In Bezug auf Figur 3b hat das erste Befestigungselement 16.11 einen durch eine stoffschlüssige Verbindung an der ersten seitlichen Oberfläche 18.1 des Maßstabs 12 befestigten ersten Abschnitt 20.1. Ferner hat das erste Befestigungselement 16.11 einen durch eine stoffschlüssige Verbindung an einer oberen Oberfläche 22 eines dem ersten Befestigungselement 16.11 zugeordneten Abschnitts 10.1 der einzelnen Abschnitte 10.1 - 10.7 des Trägers 10 befestigten zweiten Abschnitt 20.2 (vgl. Figur 3a und 3b). Die stoffschlüssige Verbindung ist insbesondere eine Klebeverbindung.

Das zweite Befestigungselement 16.12 ist dazu ausgebildet, den Maßstab 12 an der ersten Position P1 in Längsrichtung X frei beweglich gegenüber dem Träger 10 zu tragen. Ferner ist das zweite Befestigungselement 16.12 dazu ausgebildet, den Maßstab 12 in Querrichtung Y starr an dem Träger 10 zu tragen. Hierzu ist das zweite Befestigungselement 16.12 insbesondere als Festkörpergelenk ausgebildet.

Das zweite Befestigungselement 16.12 ist analog zu dem ersten Befestigungselement 16.11 mit dem Maßstab 12 sowie mit dem Abschnitt 10.1 des Trägers 10 verbunden.

In Bezug auf Figur 3a weist die Anordnung ein erstes Haftmittel 24.1 zum Befestigen des Maßstabs 12 an dem Träger 10 auf. Das erste Haftmittel 24.1 ist auf der oberen Oberfläche 22 des Abschnitts 10.1 des Trägers 10 einerseits und zwischen dem ersten Befestigungselement 16.11 und dem zweiten Befestigungselement 16.12 andererseits angeordnet. Das erste Haftmittel 24.1 ist streifenförmig ausgebildet und erstreckt sich im Wesentlichen in Querrichtung Y. Beispielsweise weist das erste Haftmittel 24.1 einen Streifen eines doppelseitigen Klebebands, insbesondere eines Transferklebebands, auf.

Das erste Haftmittel 24.1 ist entsprechend auf jedem der Abschnitte 10.1 - 10.7 des Trägers 10 (außer 10.4) angeordnet.

Die in Figur 1 gezeigten Befestigungselemente 16 weisen zudem ein an der ersten seitlichen Oberfläche 18.1 des Maßstabs 12 angeordnetes drittes Befestigungselement 16.41 und ein an der zweiten seitlichen Oberfläche 18.2 des Maßstabs 12 angeordnetes viertes Befestigungselement 16.42 auf. Das dritte Befestigungselement 16.41 und das vierte Befestigungselement 16.42 sind in Querrichtung Y einander gegenüberliegend angeordnet. Die paarweise angeordneten Befestigungselemente 16.41, 16.42 sind dem Abschnitt 10.4 des Trägers 10 zugeordnet bzw. auf diesem angeordnet.

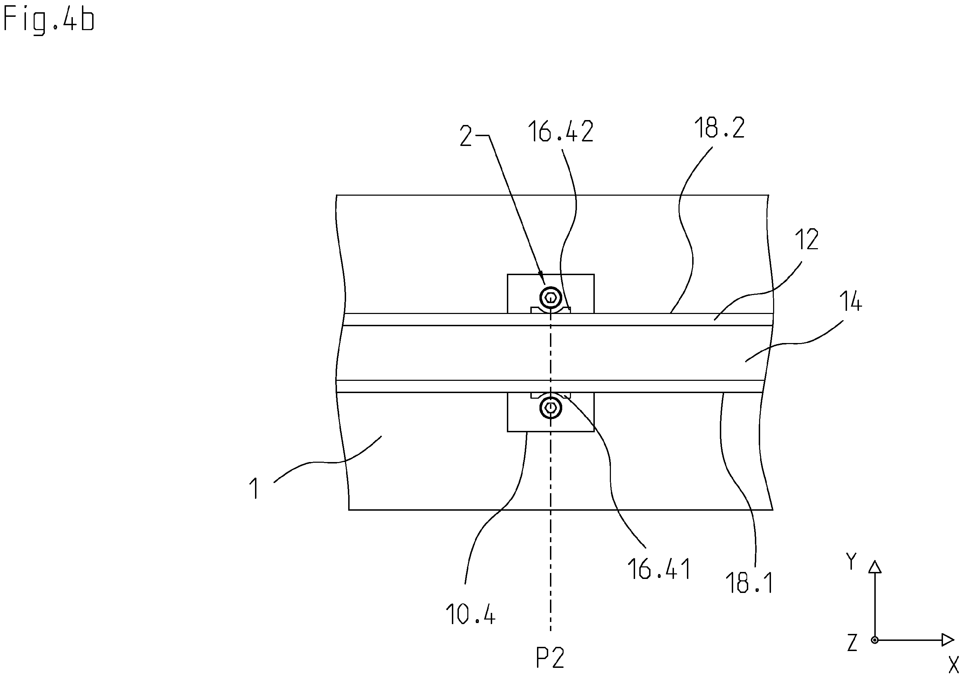

Das dritte Befestigungselement 16.41 ist dazu ausgebildet, den Maßstab 12 an einer von der ersten Position P1 verschiedenen zweiten Position P2 (vgl. Figur 4b) in Längsrichtung X und in Querrichtung Y starr an dem Träger 10 zu tragen. Das vierte Befestigungselement 16.42 ist dazu ausgebildet, den Maßstab 12 an der zweiten Position P2 in Längsrichtung X und in Querrichtung Y starr an dem Träger 10 zu tragen. Beispielsweise weisen das dritte Befestigungselement 16.41 und das vierte Befestigungselement 16.42 jeweils eine Kleberaupe, insbesondere eine Kehlnaht, zur Verbindung des Maßstabs 12 mit dem Abschnitt 10.4 des Trägers 10 auf.

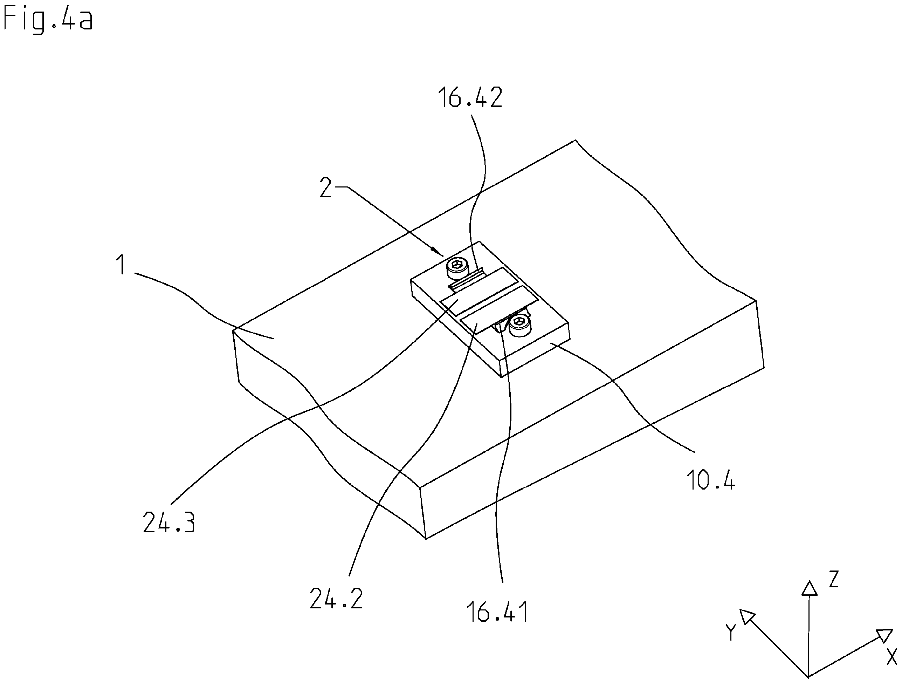

In Bezug auf Figur 4a weist die Anordnung zudem ein zweites Haftmittel 24.2 und ein drittes Haftmittel 24.3 zum Befestigen des Maßstabs 12 an dem Träger 10 auf. Das zweite Haftmittel 24.2 und das dritte Haftmittel 24.3 sind auf einer oberen Oberfläche des Abschnitts 10.4 des Trägers 10 einerseits und zwischen dem dritten Befestigungselement 16.41 und dem vierten Befestigungselement 16.42 andererseits angeordnet. Das zweite Haftmittel 24.2 und das dritte Haftmittel 24.3 sind jeweils streifenförmig ausgebildet und erstrecken sich im Wesentlichen in Längsrichtung X. Beispielsweise weisen das zweite Haftmittel 24.2 und das dritte Haftmittel 24.3 jeweils einen Streifen eines doppelseitigen Klebebands, insbesondere eines Transferklebebands, auf.

Das erste bis dritte Haftmittel 24.1 - 24.3 dienen zur Unterstützung der Befestigung des Maßstabs 12 durch das erste bis vierte Befestigungselement 16.11, 16.12, 16.41, 16.42. Dadurch wird ein besonders stabiler und sicherer Aufbau der Anordnung erreicht.

Des Weiteren dienen das erste bis dritte Haftmittel 24.1 - 24.3 zur Entkopplung des Maßstabs 12 vom Träger 10, um Reibungseinflüsse zu verhindern (bzw. definierte Scherkräfte zu erzeugen).

Beispielsweise weisen das erste bis dritte Haftmittel 24.1 - 24.3 jeweils einen Streifen eines doppelseitigen Klebebands mit einer Breite von 10 mm auf.

Anstelle des vorgenannten Transferklebebands kann auch ein sehr weicher Klebstoff mit eingemischten Kugeln oder ein flüssiger Transferkleber zum Einsatz kommen.

Das dritte und vierte Befestigungselement 16.41, 16.42 können alternativ auch derart ausgebildet sein, dass sie den Maßstab 12 an der zweiten Position P2 in Längsrichtung X starr, aber in Querrichtung Y flexibel (weich) an dem Träger 10 tragen bzw. mit diesem koppeln. Eine derartige Kopplung ist insbesondere in EP 3 026 389 A1 offenbart.

Ein Vorteil der Erfindung besteht darin, dass der Maßstab 12 durch die Befestigungselemente 16 bei Querkräften (z.B. Querbeschleunigung) in Y-Richtung ohne nennenswerte Querbewegung und Maßstabsverbiegung mit dem Grundkörper 1 verbunden wird. Dies ist insbesondere bei der Messteilung 14 zur Positionsmessung in Längsrichtung (Freiheitsgrad X) sowie in Querrichtung (Freiheitsgrad Y) vorteilhaft.

Der Grundkörper 1 besteht vorzugsweise aus einem Material mit einem thermischen Ausdehnungskoeffizienten kleiner als derjenige des Trägers 10.

Die Erfindung ist nicht auf das lichtelektrische Abtastprinzip beschränkt. Die Messteilung 14 kann insbesondere auch magnetisch oder induktiv abtastbar ausgebildet sein.

## Patentansprüche

1. Anordnung, mit
einem Träger (10),
einem auf dem Träger (10) angeordneten Maßstab (12), wobei sich der Maßstab (12) in einer Längsrichtung (X) erstreckt, und wobei der Maßstab (12) eine Messteilung (14) zur Positionsmessung zumindest in Längsrichtung (X) aufweist, und
einer Mehrzahl von Befestigungselementen (16) zum Befestigen des Maßstabs (12) an dem Träger (10),
wobei der Träger (10) eine Mehrzahl von einzelnen Abschnitten (10.1 - 10.7) aufweist, und wobei die Befestigungselemente (16) auf den einzelnen Abschnitten (10.1 - 10.7) des Trägers (10) angeordnet sind,
**dadurch gekennzeichnet, dass** die Befestigungselemente (16) mindestens ein an einer in Längsrichtung (X) verlaufenden ersten seitlichen Oberfläche (18.1) des Maßstabs (12) angeordnetes erstes Befestigungselement (16.11) aufweisen, und
dass das erste Befestigungselement (16.11) einen durch eine stoffschlüssige Verbindung an der ersten seitlichen Oberfläche (18.1) des Maßstabs (12) befestigten ersten Abschnitt (20.1) hat.

2. Anordnung nach Anspruch 1, wobei die einzelnen Abschnitte (10.1 - 10.7) des Trägers (10) jeweils einem Befestigungselement oder einem Paar von in einer Querrichtung (Y), die senkrecht zur Längsrichtung (X) verläuft, einander gegenüberliegend angeordneten Befestigungselementen (16.11, 16.12 - 16.71, 16.72) der Mehrzahl von Befestigungselementen (16) zugeordnet sind.

3. Anordnung nach Anspruch 1 oder 2, wobei die einzelnen Abschnitte (10.1 - 10.7) des Trägers (10) in Längsrichtung (X) getrennt voneinander angeordnet sind.

4. Anordnung nach einem der vorhergehenden Ansprüche, wobei die einzelnen Abschnitte (10.1 - 10.7) des Trägers (10) in Längsrichtung (X) verteilt, insbesondere äquidistant, angeordnet sind.

5. Anordnung nach einem der Ansprüche 1 bis 4, wobei das erste Befestigungselement (16.11) dazu ausgebildet ist, den Maßstab (12) an einer ersten Position (P1) in Längsrichtung (X) frei beweglich gegenüber dem Träger (10) zu tragen.

6. Anordnung nach einem der Ansprüche 1 bis 5, wobei das erste Befestigungselement (16.11) dazu ausgebildet ist, den Maßstab (12) in einer Querrichtung (Y), die senkrecht zur Längsrichtung (X) verläuft, starr an dem Träger (10) zu tragen.

7. Anordnung nach einem der Ansprüche 1 bis 6, wobei das erste Befestigungselement (16.11) einen zweiten Abschnitt (20.2) hat, wobei der zweite Abschnitt (20.2) durch eine stoffschlüssige Verbindung an einer oberen Oberfläche (22) eines Abschnitts (10.1) der einzelnen Abschnitte (10.1 - 10.7) des Trägers (10) befestigt ist.

8. Anordnung nach einem der Ansprüche 1 bis 7, wobei die stoffschlüssige Verbindung eine Klebeverbindung ist.

9. Anordnung nach einem der Ansprüche 1 bis 8, wobei die Befestigungselemente (16) ein an einer in Längsrichtung (X) verlaufenden zweiten seitlichen Oberfläche (18.2) des Maßstabs (12) angeordnetes zweites Befestigungselement (16.12) aufweisen, wobei das erste Befestigungselement (16.11) und das zweite Befestigungselement (16.12) in einer Querrichtung (Y), die senkrecht zur Längsrichtung (X) verläuft, einander gegenüberliegend angeordnet sind.

10. Anordnung nach Anspruch 9, wobei das erste Befestigungselement (16.11) und das zweite Befestigungselement (16.12) jeweils ein Festkörpergelenk aufweisen.

11. Anordnung nach Anspruch 9 oder 10, wobei die Anordnung mindestens ein erstes Haftmittel (24.1) zum Befestigen des Maßstabs (12) an dem Träger (10) aufweist, wobei das erste Haftmittel (24.1) auf einer oberen Oberfläche (22) eines dem ersten Befestigungselement (16.11) und dem zweiten Befestigungselement (16.12) zugeordneten Abschnitts (10.1) der einzelnen Abschnitte (10.1 - 10.7) des Trägers (10) und zwischen dem ersten Befestigungselement (16.11) und dem zweiten Befestigungselement (16.12) angeordnet ist.

12. Anordnung nach Anspruch 11, wobei das erste Haftmittel (24.1) streifenförmig ausgebildet ist und sich im Wesentlichen in einer Querrichtung (Y), die senkrecht zur Längsrichtung (X) verläuft, erstreckt.

13. Anordnung nach einem der Ansprüche 5 bis 12, wobei die Befestigungselemente (16) mindestens ein an der ersten seitlichen Oberfläche (18.1) des Maßstabs (12) angeordnetes drittes Befestigungselement (16.41) aufweisen, wobei das dritte Befestigungselement (16.41) dazu ausgebildet ist, den Maßstab (12) an einer von der ersten Position (P1) verschiedenen zweiten Position (P2) in Längsrichtung (X) und in einer Querrichtung (Y), die senkrecht zur Längsrichtung (X) verläuft, starr an dem Träger (10) zu tragen.

## Claims

1. Assembly, having
a support (10),
a scale (12) which is disposed on the support (10), wherein the scale (12) extends in a longitudinal direction (X), and wherein the scale (12) has a measurement graduation (14) for position measurement at least in the longitudinal direction (X), and
a plurality of fastening elements (16) for fastening the scale (12) to the support (10),
wherein the support (10) has a plurality of individual portions (10.1 - 10.7), and wherein the fastening elements (16) are disposed on the individual portions (10.1 - 10.7) of the support (10),
**characterized in that** the fastening elements (16) have at least one first fastening element (16.11) which is disposed on a lateral surface (18.1) of the scale (12) that runs in the longitudinal direction (X), and
**in that** the first fastening element (16.11) has a first portion (20.1) which is fastened by a materially integral connection on the first lateral surface (18.1) of the scale (12).

2. Assembly according to Claim 1, wherein the individual portions (10.1 - 10.7) of the support (10) are in each case assigned to a fastening element or to a pair of fastening elements (16.11, 16.12 - 16.71, 16.72) of the plurality of fastening elements (16) that are disposed so as to lie mutually opposite in a transverse direction (Y) which runs perpendicularly to the longitudinal direction (X).

3. Assembly according to Claims 1 or 2, wherein the individual portions (10.1 - 10.7) of the support (10) are disposed so as to be mutually separated in the longitudinal direction (X).

4. Assembly according to one of the preceding claims, wherein the individual portions (10.1 - 10.7) of the support (10) are disposed so as to be distributed, in particular equidistant, in the longitudinal direction (X).

5. Assembly according to one of Claims 1 to 4, wherein the first fastening element (16.11) is configured to support the scale (12) at a first position (P1) so as to be freely movable in the longitudinal direction (X) in relation to the support (10).

6. Assembly according to one of Claims 1 to 5, wherein the first fastening element (16.11) is configured to support the scale (12) on the support (10) so as to be rigid in a transverse direction (Y) which runs perpendicularly to the longitudinal direction (X).

7. Assembly according to one of Claims 1 to 6, wherein the first fastening element (16.11) has a second portion (20.2), wherein the second portion (20.2) is fastened by a materially integral connection on an upper surface (22) of a portion (10.1) of the individual portions (10.1 - 10.7) of the support (10) .

8. Assembly according to one of Claims 1 to 7, wherein the materially integral connection is an adhesive connection.

9. Assembly according to one of Claims 1 to 8, wherein the fastening elements (16) have a second fastening element (16.12) which is disposed on a second lateral surface (18.2) of the scale (12) that runs in the longitudinal direction (X), wherein the first fastening element (16.11) and the second fastening element (16.12) are disposed so as to be mutually opposite in a transverse direction (Y) which runs perpendicularly to the longitudinal direction (X).

10. Assembly according to Claim 9, wherein the first fastening element (16.11) and the second fastening element (16.12) have in each case one flexure hinge.

11. Assembly according to Claim 9 or 10, wherein the assembly has at least one first adhesive agent (24.1) for fastening the scale (12) to the support (10), wherein the first adhesive agent (24.1) is disposed on an upper surface (22) of a portion (10.1) of the individual portions (10.1 - 10.7) of the support (10) that is assigned to the first fastening element (16.11) and to the second fastening element (16.12), and between the first fastening element (16.11) and the second fastening element (16.12).

12. Assembly according to Claim 11, wherein the first adhesive agent (24.1) is configured in the shape of stripes, and extends substantially in a transverse direction (Y) which runs perpendicularly to the longitudinal direction (X).

13. Assembly according to one of Claims 5 to 12, wherein the fastening elements (16) have at least one third fastening element (16.41) which is disposed on the first lateral surface (18.1) of the scale (12), wherein the third fastening element (16.41) is configured to support the scale (12) on the support (10) at a second position (P2), different from the first position (P1), so as to be rigid in a longitudinal direction (X) and in a transverse direction (Y) which runs perpendicularly to the longitudinal direction (X).

## Revendications

1. Agencement, comprenant
un support (10),
une échelle (12) disposée sur le support (10), l'échelle (12) s'étendant dans une direction longitudinale (X), et l'échelle (12) présentant une graduation de mesure (14) pour la mesure de position au moins dans la direction longitudinale (X), et
une pluralité d'éléments de fixation (16) servant à la fixation de l'échelle (12) sur le support (10),
le support (10) présentant une pluralité de sections individuelles (10.1 - 10.7), et les éléments de fixation (16) étant disposés sur les sections individuelles (10.1 - 10.7) du support (10),
**caractérisé en ce que** les éléments de fixation (16) présentent au moins un premier élément de fixation (16.11) disposé sur une première surface latérale (18.1), s'étendant dans la direction longitudinale (X), de l'échelle (12), et
**en ce que** le premier élément de fixation (16.11) a une première section (20.1) fixée sur la première surface latérale (18.1) de l'échelle (12) par le biais d'une liaison de matière.

2. Agencement selon la revendication 1, les sections individuelles (10.1 - 10.7) du support (10) étant associées respectivement à un élément de fixation ou à une paire d'éléments de fixation (16.11, 16.12 - 16.71, 16.72) de la pluralité d'éléments de fixation (16), lesquels éléments de la paire d'éléments de fixation sont disposés en regard l'un de l'autre dans une direction transversale (Y) qui s'étend perpendiculairement à la direction longitudinale (X).

3. Agencement selon la revendication 1 ou 2, les sections individuelles (10.1 - 10.7) du support (10) étant disposées séparément les unes des autres dans la direction longitudinale (X).

4. Agencement selon l'une des revendications précédentes, les sections individuelles (10.1 - 10.7) du support (10) étant disposées de manière répartie, en particulier de manière équidistante, dans la direction longitudinale (X).

5. Agencement selon l'une des revendications 1 à 4, le premier élément de fixation (16.11) étant réalisé pour supporter l'échelle (12) de manière librement mobile dans la direction longitudinale (X) par rapport au support (10) à une première position (P1).

6. Agencement selon l'une des revendications 1 à 5, le premier élément de fixation (16.11) étant réalisé pour supporter l'échelle (12) rigidement sur le support (10) dans une direction transversale (Y) qui s'étend perpendiculairement à la direction longitudinale (X).

7. Agencement selon l'une des revendications 1 à 6, le premier élément de fixation (16.11) ayant une deuxième section (20.2), la deuxième section (20.2) étant fixée par liaison de matière sur une surface supérieure (22) d'une section (10.1) des sections individuelles (10.1 - 10.7) du support (10).

8. Agencement selon l'une des revendications 1 à 7, la liaison de matière étant une liaison adhésive.

9. Agencement selon l'une des revendications 1 à 8, les éléments de fixation (16) présentant un deuxième élément de fixation (16.12) disposé sur une deuxième surface latérale (18.2), s'étendant dans la direction longitudinale (X), de l'échelle (12), le premier élément de fixation (16.11) et le deuxième élément de fixation (16.12) étant disposés en regard l'un de l'autre dans une direction transversale (Y) qui s'étend perpendiculairement à la direction longitudinale (X).

10. Agencement selon la revendication 9, le premier élément de fixation (16.11) et le deuxième élément de fixation (16.12) présentant respectivement une articulation monolithique.

11. Agencement selon la revendication 9 ou 10, l'agencement présentant au moins un premier adhésif (24.1) servant à la fixation de l'échelle (12) sur le support (10), le premier adhésif (24.1) étant disposé sur une surface supérieure (22) d'une section (10.1), associée au premier élément de fixation (16.11) et au deuxième élément de fixation (16.12), des sections individuelles (10.1 - 10.7) du support (10), et entre le premier élément de fixation (16.11) et le deuxième élément de fixation (16.12).

12. Agencement selon la revendication 11, le premier adhésif (24.1) étant réalisé en forme de bande et s'étendant sensiblement dans une direction transversale (Y) qui s'étend perpendiculairement à la direction longitudinale (X).

13. Agencement selon l'une des revendications 5 à 12, les éléments de fixation (16) présentant au moins un troisième élément de fixation (16.41) disposé sur la première surface latérale (18.1) de l'échelle (12), le troisième élément de fixation (16.41) étant réalisé pour supporter l'échelle (12) rigidement sur le support (10) à une deuxième position (P2) différente de la première position (P1) dans la direction longitudinale (X) et dans une direction transversale (Y) qui s'étend perpendiculairement à la direction longitudinale (X).
